# EUROPÄISCHE PATENTSCHRIFT

(11) **EP 1 034 972 B1**
(45) Veröffentlichungstag und Bekanntmachung des Hinweises auf die Patenterteilung: **02.11.2005**
(21) Anmeldenummer: 00102513.9
(22) Anmeldetag: 05.02.2000
(51) Int. Cl.: B60N 2/12, B60N 2/20

(54) **Betätigungsanordnung für einen Fahrzeugsitz**
Actuating system for a vehicle seat
Système d'actionnement pour un siège de véhicule

(30) Priorität: 08.03.1999 DE 19910084
(43) Veröffentlichungstag der Anmeldung: 13.09.2000
(73) Patentinhaber: DaimlerChrysler AG, 70567 Stuttgart (DE)
(72) Erfinder: Krist, Rudolf, 71636 Ludwigsburg (DE); Schmidt, Bernd, 72218 Wildberg (DE); Schrom, Ralf-Henning, 72108 Rottenburg (DE); Schulz, Volkmar, 96479 Weitransdorf (DE); Shephard, Philip C., Birmingham B28 OQR (GB)

(56) Entgegenhaltungen:
- DE-A- 4 324 734
- GB-A- 1 165 108
- PATENT ABSTRACTS OF JAPAN vol. 1996, no. 11, 29. November 1996 (1996-11-29) -& JP 08 183376 A (DELTA KOGYO CO LTD), 16. Juli 1996 (1996-07-16)

## Beschreibung

Die Erfindung betrifft eine Betätigungsanordnung für einen Fahrzeugsitz mit einer zum Erleichtern des Ein- und Ausstiegs in eine Ausweichstellung vorklappbaren Rückenlehne nach dem Oberbegriff des Patentanspruchs 1.

Aus der GB1 165 108 A ist bereits eine derartige Betätigungsanordnung als bekannt zu entnehmen, bei der die Rückenlehne in ihrer zurückgeklappten Endlage über beidseitig angeordnete Drehfallenverriegelungen festgelegt ist. Die Drehfallen sind dabei mit ihrer jeweiligen Fallenachse am Sitzkissenteil gelagert und umgreifen in ihrer Verriegelungsstellung bei zurückgeklappter Rückenlehne jeweils ein zugeordnetes Haltemittel der Rückenlehne. Über eine Verbindungsstange sind die beiden Drehfallen drehgekoppelt, wodurch diese synchron entriegelt werden können. Zur Entriegelung ist dabei ein gemeinsames Betätigungselement in Form eines Pedals vorgesehen, welches direkt an einer der Drehfallen befestigt ist.

Durch die synchrone Schaltung der beiden Drehfallen kann zwar die Drehfallenentriegelung bei reduziertem Wartungsaufwand mit hoher Betriebssicherheit erfolgen. Nachteilig bei einer derartigen Betätigungsanordnung ist u.a. die umständliche Entriegelung der Drehfallen über das Pedal.

Weiter sind aus der DE 43 24 734 A1 und aus der DE 41 42 924 A1 derartige Betätigungsanordnungen bekannt, bei denen beide Drehfallenverriegelungen über jeweils einen zugeordneten Bowdenzug synchron fernentriegelbar sind. Unter ungünstigen Bedingungen, z.B. infolge übermäßiger Längung eines der Bowdenzugseile kann es zu einer unvollständigen Entriegelung einer der Drehfallenverriegelungen kommen, so dass die Rückenlehne nicht mehr problemlos in ihre Ausweichstellung vorgeklappt werden kann. Um die Betriebssicherheit zu gewährleisten, muss ein entsprechend hoher Wartungsaufwand getrieben werden.

Aufgabe der Erfindung ist es daher, eine Betätigungsanordnung der im Oberbegriff des Patentanspruchs 1 angegebenen Art so zu verbessern, dass unter Aufrechterhaltung einer hohen Betriebssicherheit eine bedienungsfreundlichere Drehfallenentriegelung und stabilere Verriegelung der Rückenlehne gewährleistet ist.

Diese Aufgabe wird erfindungsgemäß durch eine Betätigungsanordnung mit den Merkmalen des Patentanspruchs 1 gelöst. Vorteilhafte Ausführungsformen der Erfindung sind in den weiteren Patentansprüchen beschrieben.

Durch die Verbindungsstange ist auf einfache Weise sichergestellt, daß beide Drehfallenverriegelungen unter allen Betriebsbedingungen und dauerhaft synchron arbeiten. Zur Bediensicherheit trägt auch die Reduzierung der Zugmittelanordnung um einen Zugmittelstrang bei, da bei der Betätigung eine entsprechend geringere Reibung überwunden werden muß. Außerdem reduziert sich hierdurch der Wartungsaufwand, da die Verbindungsstange im Unterschied zu einem Seilzug keiner Wartung bedarf.

Durch Lagerung der Drehfallen am Sitzkissenteil läßt sich das Gewicht der Rückenlehne in vorteilhafter Weise reduzieren. Zudem wird in der Rückenlehne kein Bauraum für die Verbindungsstange benötigt.

Wenn das Betätigungselement über einen Bowdenzug und eine Steuerungsmechanik mit einer der Drehfallen zusammenwirkt, läßt sich auf einfache Weise die Betriebssicherheit der Verriegelung erhöhen. Insbesondere kann sichergestellt werden, daß die Drehfallen erst unter ihrer Federbelastung verriegeln können, wenn die Rückenlehne ihre zurückgeklappte Endlage erreicht hat.

Eine leichte und dennoch sehr stabile Ausführung wird durch eine U-förmige Gestaltung der Drehfallen erreicht. Vorzugsweise wirken die Bügel mit einem zugeordneten Halteschenkel zusammen, der Bestandteil des ohnehin erforderlichen Stützbeschlages der Rückenlehne ist.

Durch die Höheneinstellbarkeit der Auflagemittel läßt sich eine weitgehend spielfreie Festlegung der freien Schenkelenden durch die Bügel erzielen.

Bei einem Integralsitz läßt sich die Verriegelungsmechanik auf der im Kollisionfall mehr belasteten Seite auf einfache Weise durch einen auf dieser Seite dicker ausgestalteten Bügel verstärken.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine Seitenansicht auf einen Fahrzeugsitz mit einer vorklappbaren Rückenlehne und einer Betätigungsanordnung nach einer bevorzugten Ausführungsform der Erfindung;
- Fig.2a,b: jeweils eine schematische Seitenansicht auf die Rückenlehne mit seitlichen, an einer Schwenkachse gelagerten Stützbeschläge, die durch die jeweils zugeordnete Drehfallenverriegelung am Sitzrahmen festlegbar ist;
- Fig.3a,b: eine perspektivische Ansicht auf einen Halteschenkel, der durch eine Drehfalle festgelegt und auf einem Auflagemittel am Sitzrahmen abgestützt ist sowie eine perspektivische Ansicht auf einen Bolzen, mit dem das Auflagemittel am Sitzrahmen angeordnet ist;
- Fig.4: eine perspektivische Ansicht auf die beiden Drehfallenverriegelungen, deren Drehfallen über eine Verbindungsstange miteinander drehgekoppelt sind;
- Fig.5a,b: jeweils eine schematische Seitenansicht auf Bauteile einer Steuerungsmechanik zum Sichern und Entsichern der Drehriegel in der verriegelten Stellung.

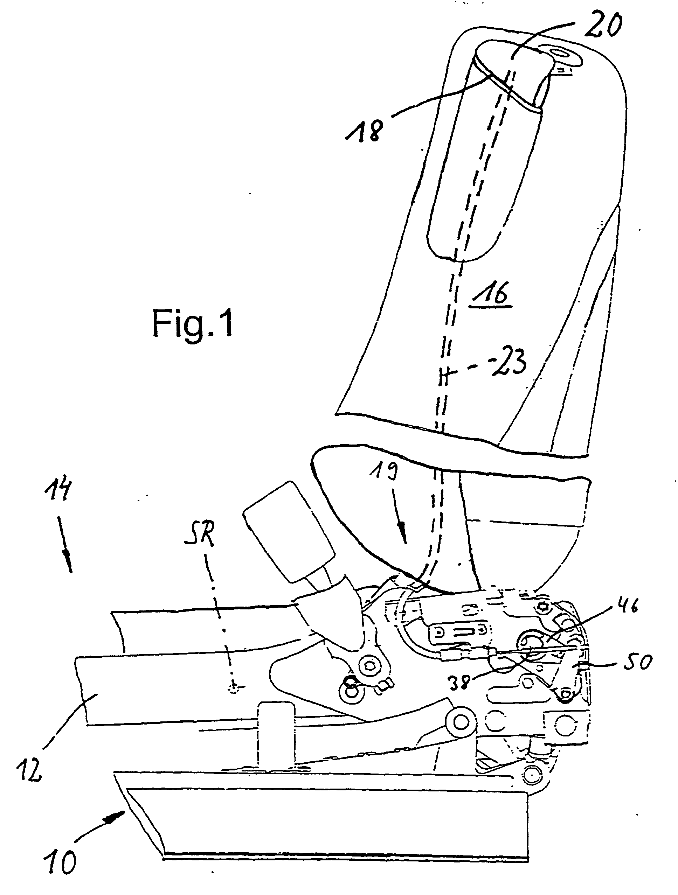

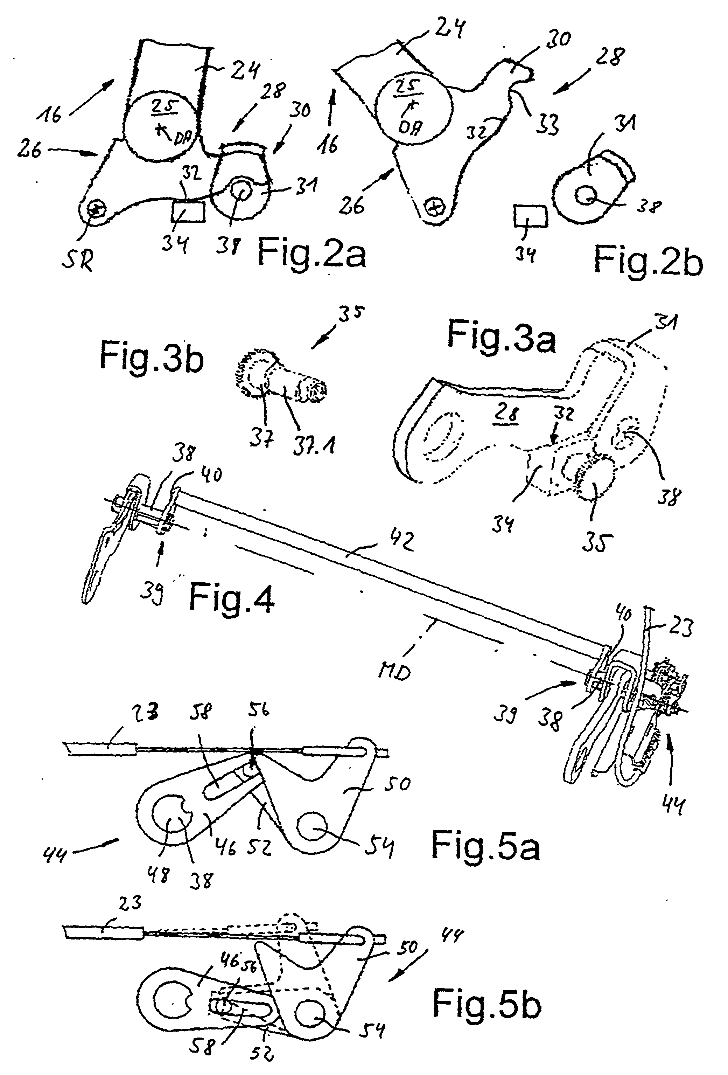

In Fig.1 ist in Seitenansicht ein als Integralsitz mit in tegriertem Sicherheitsgurtsystem ausgebildeter, längsverstellbarer Fahrzeugsitz dargestellt, der einen über einem Sitzuntergestell 10 höhenverstellbar angeordneten Sitzrahmen 12 eines schematisch angedeuteten Sitzkissenteils 14 umfaßt. An dem Sitzrahmen 12 des Sitzkissenteils 14 ist eine Rückenlehne 16 angeordnet, die zum Erleichtern des Ein- und Ausstiegs um eine ihr gegenüber nach vorne versetzt angeordnete Schwenkachse SR in eine Ausweichstellung vorklappbar ist, wobei beim Vorklappen der Rückenlehne 16 gleichzeitig ein nicht dargestellter Antriebsmotor einer Längsverstelleinrichtung über einen Mikroschalter aktiviert und der Fahrzeugsitz motorisch nach vorne verfahren wird. Im oberen Seitenbereich der Rückenlehne 16 ist ein oberer Gurtverankerungspunkt 18 befestigt, durch den der Sicherheitsgurt aus dem Inneren des Fahrzeugsitzes austritt. Oberhalb des Gurtverankerungspunktes 18 ist ein Betätigungselement 20 angeordnet, mit dem Drehfallenverriegelungen 22 (Fig.2a,2b) über einen hier als Bowdenzug ausgebildeten Zugmittelstrang 23 einer Zugmittelanordnung 19 synchron fernentriegelbar sind, wonach die Rückenlehne 16 aus der zurückgeklappten in die vorgeklappte Ausweichstellung bringbar ist.

In den Fig.2a und 2b ist jeweils in schematischer Ansicht ein Lehnenrahmen 24 der Rückenlehne 16 dargestellt, der mit seinen zwei Stützbeschlägen 26 um die Schwenkachse SR verschwenkbar ist, wobei die beiden Stützbeschläge 26 im seitlichen unteren Bereich der Rückenlehne 16 innenseitig am Sitzrahmen 12 (Fig.1) des Sitzkissenteils 14 gelagert sind. In Fig.2a ist der Lehnenrahmen 24 mit den Stützbeschlägen 26 in der zurückgeklappten Endlage und in Fig.2b in der nach vorne geklappten Ausweichstellung dargestellt. An den beiden Stützbeschlägen 26 ist im Abstand hinter der vorderen Schwenkachse SR des Rückenlehne 16 jeweils ein Drehgelenk 25 angeordnet, um dessen Drehgelenkachse DA der Lehnenrahmen 24 verschwenkt und damit die Neigung der Rückenlehne 16 eingestellt werden kann. Die Stützbeschläge 26 weisen jeweils einen nach hinten abragenden Halteschenkel 28 auf, der in einem Abstand hinter dem zugeordneten Drehgelenk 25 der Rückenlehne 16 endet. Die Halteschenkel 28 weisen jeweils ein freies Schenkelende 30 auf, das in der zurückgeklappten Endlage der Rückenlehne 16 durch jeweils eine zugeordnete, über das Betätigungselement 20 fernentriegelbare Drehfalle 31 am Sitzrahmen 12 des Sitzkissenteils 14 verriegelt festgelegt ist. Die Form und Funktion der Drehfallenverriegelungen 22 mit den Drehfallen 31 und den Halteschenkeln 28 ist insbesondere unter Bezugnahme von Fig.4 noch näher erläutert.

In der zurückgeklappten Endlage stützten sich die Stützbeschläge 26 mit Stützstellen 32 an Auflagemitteln 34 ab, die am Sitzrahmen 12 des Sitzkissenteils 14 angeordnet sind. Die Stützstellen 32 befinden sich vorzugsweise in einem Abstand hinter dem Drehgelenk 25 der Rückenlehne 16. In Fig. 3a ist einer der durch die Drehfallen 31 festgelegten Halteschenkel 28 dargestellt, unterhalb dessen Stützstelle 32 das Auflagemittel 34 mittels eines Bolzens 35 und einer nicht dargestellten Gegenmutter am Sitzrahmen 12 festgelegt ist. Der Bolzenschaft 37 des Bolzens 35 weist dabei gemäß Fig.3b einen gegenüber der Bolzenachse exzentrisch angeordneten Mittelabschnitt 37.1 zur Aufnahme des Auflagemittels 34 auf, so daß dieses höhenverstellbar am Sitzrahmen 12 befestigt werden kann. Durch die Höheneinstellbarkeit der Auflagemittel 34 läßt sich eine weitgehend spielfreie Festlegung der freien Schenkelenden 30 durch die Drehfallen 31 erzielen.

Die Drehfallen 31 sind - wie in Zusammenschau der Fig.2 bis 4 erkennbar - als etwa U-bügelförmige Drehriegel ausgebildet, die jeweils eine als Achsstummel ausgebildete Riegelachse 38 aufweisen. Die beiden Achsstummel 38 liegen auf einer gemeinsamen Fallenachse MD. An den innenseitigen Enden 39 der Achsstummel 38 ist jeweils ein Hebelarm 40 befestigt, die über eine exzentrisch zu der Fallenachse MD der Achsstummel 38 angeordnete Verbindungsstange 42 fest miteinander verbunden sind. Somit sind die beiden, dem jeweiligen Halteschenkel 28 zugeordneten Drehfallen 31 miteinander drehgekoppelt, wobei die gesamte Baueinheit mit den beiden Drehfallen 31, den Achsstummeln 38, der Hebelarme 40 und der Verbindungsstange 42 um die Achsstummel 38 verdrehbar am Sitzrahmen 12 gelagert sind. In Fig.4 ist weiterhin erkennbar, daß die Drehfalle 31 auf der Seite des Gurtverankerungspunktes 18 verstärkt ausgebildet ist, da bei einem Integralsitz auf den Stützbeschlag 26 auf dieser Seite z.B. bei einem Unfall eine besonders hohe Kraft wirkt. In der Verriegelungsstellung der U-förmigen Bügel 31 umgreifen diese das Schenkelende 30 des zugeordneten Halteschenkels 28, wodurch der jeweils zugeordnete Stützbeschlag 26 vorne an der Schwenkachse SR und hinten über die Drehfalle 31 am Sitzrahmen 12 festgelegt ist. Zum Entriegeln der Schenkelenden 30 werden die Drehfallen 31 - wie in Fig.2b ersichtlich - um die Fallenachse MD im Uhrzeigersinn nach hinten gedreht; demgemäß werden sie zum Verriegeln der Schenkelenden 30 gegen den Uhrzeigersinn nach vorne bewegt. Die Schenkelenden 30 der Halteschenkel 28 weisen im Bereich der Fallenachse 38 bzw. der Verbindungsstange 36 eine Einbuchtung 33 (Fig.2b) auf. Dabei wäre es auch denkbar, daß sich die Stützstellen 32 der Stützbeschläge 26 im Bereich der Einbuchtungen 33 an den Fallenachse 38 abstützen; in diesem Fall müßten keine Auflagemittel 34 zum Abstützen der Stützbeschläge 26 am Sitzrahmen 12 vorgesehen werden.

In den Fig.4, 5a und 5b sind in schematischer Seitenansicht Bauteile einer Steuerungsmechanik 44 erkennbar, die dem Sichern und Entsichern der Drehriegel 22 in der verriegelten Stellung dienen. Die Steuerungsmechanik 44 umfaßt einen drehbar gelagerten Kulissenarm 46, der an einem Fallenachsenende 48 der in Fig.4 rechten Fallenachse 31 drehfest aufgesteckt ist. In einem Abstand von der Fallenachse 38 sind ein etwa V-förmiger Zughebel 50 und ein Stifthebel 52 hintereinander angeordnet und um eine Hebelachse 54 drehbar gelagert, wobei von dem Stifthebel 52 ein Kulissenstift 56 absteht, der in ein Langloch 58 des Kulissenarms 46 eingreift. Der V-förmige Zughebel 50 und der Stifthebel 52 sind nicht miteinander drehfest verbunden. Der Bowdenzug 23 ist am hinteren Arm des V-förmigen Zughebels 50 befestigt.

Wird nun der Zughebel 50 über den Bowdenzug 23 durch das Betätigungselement 20 angesteuert und gegen die Federkraft einer nicht gezeigten Spiralfeder gegen den Uhrzeigersinn verdreht, so führt der Zughebel 50 durch seinen vorderen Arm bei seiner Schwenkbewegung nach vorne den Kulissenstift 56 mit, wodurch der Stifthebel 52 und der Zughebel 50 gemeinsam aus der in Fig.5a gezeigten in die Stellung in Fig.5b verdreht werden. Durch den in dem Langloch 58 geführten Kulissenstift 56 wird der Kulissenarm 46 mit dem Uhrzeigersinn verdreht. Die mit dem Kulissenarm 46 über die Fallenachse 38 drehfest verbundenen Drehfallen 31 werden ebenfalls in Richtung mit dem Uhrzeigersinn verdreht, wodurch die beiden freien Schenkelenden 30 (Fig.2b) zum Vorklappen der Rückenlehne 16 freigegeben werden. Der Stifthebel 52 wird in der in Fig.5b dargestellten unteren Stellung ggf. durch eine nicht gezeigte Sicherung dann gehalten, wenn die Rückenlehne 16 nach vorne verschwenkt wird. Beim Loslassen des Betätigungselements 20 und dem damit verbundenen Zurückschwenken des Zughebels 50 in Richtung mit dem Uhrzeigersinn verbleibt dann der Stifthebel 52 an seinem Ort, bis die Rückenlehne 16 wieder ihre zurückgeklappte Endlage erreicht hat; das gleich gilt für den mit dem Stifthebel 52 bewegungsgekoppelten Kulissenarm 46, der an einer der Fallenachsen 38 angeordnet ist. Nach dem Zurückklappen der Rückenlehne 16sorgt die Sicherung dafür, daß der Stifthebel 52 und damit auch der Kulissenhebel 46 wieder in ihre in Fig.5a gezeigte Ausgangsstellung zurück verschwenkt werden, wobei die Drehfallen wieder ihre verriegelnde Stellung einnehmen. Wird hingegen das Betätigungselement 20 und damit der Bowdenzug 23 betätigt und danach die Rückenlehne 16 nicht vorgeklappt, so sorgt die Sicherung dafür, daß die Drehfallen 31 nach Loslassen des Betätigungselements 20 wieder in ihre die Halteschenkel 28 festlegende Stellung zurückbewegt werden.

## Patentansprüche

1. Betätigungsanordnung für einen Fahrzeugsitz, dessen Rückenlehne (16) zum Erleichtern des Ein- und Ausstiegs um eine Schwenkachse (SR) in eine Ausweichstellung vorklappbar ist, wobei die Rückenlehne (16) in ihrer zurückgeklappten Endlage über beidseitig angeordnete Drehfallenverriegelungen (22) festgelegt ist, die durch ein gemeinsames Betätigungselement (20) synchron entriegelbar sind, wobei die Drehfallen (31) mit ihrer Fallenachse (38) am Sitzkissenteil (14) gelagert sind, in ihrer Verriegelungsstellung bei zurückgeklappter Rückenlehne (16) jeweils ein zugeordnetes Haltemittel (28) der Rückenlehne (16) verriegelnd umgreifen, und über eine Verbindungsstange (42) drehgekoppelt sind,
**dadurch gekennzeichnet,**
**dass** zur Fernentriegelung eine Zugmittelanordnung (19) vorgesehen ist, wobei die Drehfallen (31) über einen einzigen Zugmittelstrang (23) mit dem Betätigungselement (20) wirkverbunden sind;
und **dass** die Drehfallen (31) als U-förmige Bügel ausgebildet sind, die in ihrer Verriegelungsstellung ein zugeordnetes Schenkelende (30) eines Halteschenkels (28) der Rückenlehne (16) umgreifen.

2. Betätigungsanordnung nach Anspruch 1,
**dadurch gekennzeichnet,**
**dass** das Betätigungselement (20) seitlich an der Rückenlehne (16) angeordnet ist und über einen Bowdenzug (23) mit einer Steuerungsmechanik (44) verbunden ist, die einer der Drehfallen (31) zugeordnet ist.

3. Betätigungsanordnung nach Anspruch 1,
**dadurch gekennzeichnet,**
**dass** die Schenkelenden (30) der Halteschenkel (28) in der Verriegelungsstellung auf höheneinstellbaren Auflagemittel (34) am Sitzrahmen (12) abgestützt sind.

4. Betätigungsanordnung nach Anspruch 1,
**dadurch gekennzeichnet,**
**dass** die Fallenachsen (48) als Achsstummel (38) ausgebildet und über Hebelarme (40) mit dem zugeordneten Ende der Verbindungsstange (42) miteinander verbunden sind.

5. Betätigungsanordnung nach Anspruch 1,
**dadurch gekennzeichnet,**
**dass** der Fahrzeugsitz ein Integralsitz mit integriertem Sicherheitsgurtsystem ist und dass der Bügel (31) auf der Seite des oberen Gurtverankerungspunktes (18) verstärkt ist, wobei der Zugmittelstrang (23) und die Steuerungsmechanik (44) auf der Seite des verstärkten Bügels (31) angeordnet sind.

6. Betätigungsanordnung nach Anspruch 1,
**dadurch gekennzeichnet,**
**dass** die Steuerungsmechanik (44) auf ein gegenüber dem Bügel (31) abstehendes Fallenachsenende (48) aufgesteckt und am Sitzkissenteil (14) festgelegt ist.

## Claims

1. Actuation arrangement for a vehicle seat the backrest (16) of which can be folded forwards, into a passing position, about a pivoting axis (SR) in order to facilitate getting in and getting out of a given vehicle, whereby the backrest (16) is held, in its end position in which it is folded back, by rotating stop catches (22), which can be synchronously released by a common actuation element (20), disposed on both sides, whereby the rotating stops (31) are supported, with their stop shafts (38), on the seat cushion section (14), and, in their locking position, with the backrest (16) folded back, in each case clasp an associated retaining means (28) of the backrest (16) and are rotationally coupled by means of a connection rod (42),
**characterized in that**
there is a traction arrangement (19) for remote release, whereby the rotating stops (31) are operatively connected to the actuating element (20) by means of a single drawing chord (23);
and **in that** the rotating stops (31) are developed as U-shaped holders that, in their locking position, clasp an associated end of a side piece (30).

2. Actuation arrangement in accordance with claim 1,
**characterized in that**
the actuating element (20) is disposed laterally on the backrest (16) and is connected to a control mechanism (44), which is assigned to one of the rotating stops, by means of a Bowden cable or wire (23).

3. Actuation arrangement in accordance with claim 1,
**characterized in that**
the sidepiece ends (30) of the retaining arms (28) are supported, in the locking position, on height-adjustable abutment means (34) on the seat frame (12).

4. Actuation arrangement in accordance with claim 1,
**characterized in that**
the stop shafts (48) are developed as shaft necks and are connected to each other by means of lever arms (40) with the associated end of the connection rod (42).

5. Actuation arrangement in accordance with claim 1,
**characterized in that**
the vehicle seat is an integral seat with a built-in safety-belt system and **in that** the holder (31) is reinforced on the side of the upper belt attachment point (18) whereby the drawing line (23) and the control mechanism (44) are disposed on the side of the reinforced holder (31).

6. Actuation arrangement in accordance with claim 1,
**characterized in that**
the control mechanism (44) is placed on a stop shaft end (48) projecting in relation to the holder (31) and is attached to the seat cushion section (14).

## Revendications

1. Ensemble d'actionnement pour un siège de véhicule dont le dossier (16) peut être rabattu vers l'avant autour d'un axe de pivotement (SR) jusque dans une position de contournement afin de faciliter l'entrée et la sortie, dans lequel :
- le dossier (16) est fixé dans sa position finale rabattue vers l'arrière via des verrouillages à loquet rotatif (22) agencés des deux côtés et qui peuvent être déverrouillés de manière synchrone par un élément d'actionnement commun (20) ; et
- les loquets rotatifs (31) avec leur axe de loquet (38) sont montés sur la partie du coussin d'assise (14), viennent coiffer respectivement de manière verrouillée un moyen de maintien associé (28) du dossier (16) dans leur position de verrouillage lorsque le dossier (16) est rabattu vers l'arrière et sont accouplés en rotation via une tige de liaison (42),
**caractérisé en ce que** :
- un dispositif à moyen de traction (19) est prévu pour le déverrouillage à distance, les loquets rotatifs (31) étant en liaison active avec l'élément d'actionnement (20) via un unique cordon (23) du moyen de traction ; et
- les loquets rotatifs (31) sont réalisés comme étriers en forme de U qui viennent coiffer dans leur position de verrouillage l'extrémité de traverse associée (30) d'une traverse de maintien (28) du dossier (16).

2. Ensemble d'actionnement selon la revendication 1, **caractérisé en ce que** l'élément d'actionnement (20) est agencé latéralement sur le dossier (16) et est relié via un câble Bowden (23) à un mécanisme de commande (44) qui est associé à un des loquets rotatifs (31).

3. Ensemble d'actionnement selon la revendication 1, **caractérisé en ce que** les extrémités de traverse (30) de la traverse de maintien (28) sont soutenues dans la position de verrouillage sur des moyens d'appui réglables en hauteur (34) au niveau du cadre de siège (12).

4. Ensemble d'actionnement selon la revendication 1, **caractérisé en ce que** les axes de loquet (48) sont réalisés comme tourillons (38) et sont reliés entre eux par l'extrémité associée de la tige de liaison (42) via des leviers (40).

5. Ensemble d'actionnement selon la revendication 1, **caractérisé en ce que** le siège du véhicule est un siège intégral avec système de ceinture de sécurité intégré et **en ce que** l'étrier (31) est renforcé sur le côté du point d'ancrage supérieur de ceinture (18), le cordon (23) du moyen de traction et le mécanisme de commande (44) étant agencés sur le côté de l'étrier renforcé (31).

6. Ensemble d'actionnement selon 1a revendication 1, **caractérisé en ce que** le mécanisme de commande (44) est emmanché sur une extrémité d'axe de loquet (48) en saillie à l'opposé de l'étrier (31) et est fixé sur la partie du coussin d'assise (14).
